# EUROPÄISCHE PATENTSCHRIFT

(11) **EP 2 734 324 B1**
(45) Veröffentlichungstag und Bekanntmachung des Hinweises auf die Patenterteilung: **11.12.2019**
(21) Anmeldenummer: 12750518.8
(22) Anmeldetag: 11.07.2012
(51) Int. Cl.: B22F 3/16, F16D 23/00

(54) **VERFAHREN ZUM STOFFSCHLÜSSIGEN VERBINDEN ZWEIER METALLISCHER BAUTEILE**
METHOD FOR MATERIAL FIT JOINING OF TWO METALLIC COMPONENTS
PROCÉDÉ DE RELIER SOLIDEMENT DEUX COMPOSANTS MÉTALLIQUES

(30) Priorität: 22.07.2011 AT 10752011
(43) Veröffentlichungstag der Anmeldung: 28.05.2014
(73) Patentinhaber: Miba Sinter Austria GmbH, 4663 Laakirchen (AT)
(72) Erfinder: OHLER, Martin, A-4655 Vorchdorf (AT); KRONBERGER, Christian, A-4655 Vorchdorf (AT); RÖSSLER, Horst, A-4631 Krenglbach (AT); MÜLLER, Alexander, A-4813 Altmünster (AT)
(74) Vertreter: Burger, Hannes
(86) Internationale Anmeldenummer: PCT/AT2012/050100
(87) Internationale Veröffentlichungsnummer: WO 2013/013254

(56) Entgegenhaltungen:
- EP-A1- 0 565 160
- WO-A1-2011/038790
- AT-A1- 507 913
- US-A1- 2004 136 858
- US-A1- 2004 177 719

## Beschreibung

Die Erfindung betrifft ein Verfahren zum stoffschlüssigen Verbinden eines ersten metallischen Bauteils mit einem ersten Oberflächenbereich mit einem zweiten metallischen Bauteil mit einem zweiten Oberflächenbereich, wobei die beiden Oberflächenbereiche einander zugewandt werden, und wobei zumindest einer der beiden Bauteile ein Sinterbauteil ist und vor der Ausbildung der stoffschlüssigen Verbindung der beiden Bauteile miteinander zumindest in dem Oberflächenbereich des Sinterbauteils, in dem die stoffschlüssige Verbindung ausgebildet wird, die Dichte erhöht wird.

Zur Verbindung eines Zahnrades mit einem Kupplungskörpers sind aus dem Stand der Technik bereits unterschiedlichste Verfahren bekannt.

Beispielsweise beschreit die EP 0 563 949 A1 ein Verfahren zur Herstellung eines zweiteiligen Bauteiles, nämlich eines Zahnrades mit einem Kupplungskörper auf einem Sitz des Zahnrades, insbesondere für Synchrongetriebe, bei dem das Zahnrad und der Kupplungskörper einzeln hergestellt und anschließend fest miteinander verbunden werden, wozu eines der beiden Teile erwärmt und mit dem anderen Teil dann durch Schrumpfsitz verbunden wird. Es wird damit ein Zahnrad mit Kupplungskörper hergestellt, bei dem das Zahnrad und der Kupplungskörper nicht nur durch Reibschluss sondern auch durch Formschluss miteinander verbunden sind.

Die DE 10 2006 028 286 A1 beschreibt aus einem Zahnrad und einem Kupplungskörper bestehende Schaltzahnräder, die zusammengesteckt in ihrer gemeinsamen Verbindungspassform ein von einem exakten Kreisdurchmesser abweichendes Profil haben, z.B. irgendeine Polygonform. Zur Vermeidung des Auseinanderrutschens der beiden Teile ist ein Klebemittel in der gemeinsamen Passform vorgesehen, wobei die beiden Teile gegeneinander so oft verschoben werden, bis durch ein "Festfressen" die gewünschte Verbindungsfestigkeit erreicht ist. Danach wird der Bereich verstemmt.

Die GB 2 320 032 A beschreibt ein Verfahren zur Herstellung eines Sinterbauteils mit unterschiedlichem Durchmesser entlang der Hauptachse durch Verbinden von zwei Teilkörpern und anschließendes gemeinsames Sintern.

Aus der US 3,678,557 A ist ein Verfahren bekannt, nach dem ein Gusszahnrad mit einem Kupplungskörper aus Sintermetall durch Schweißen verbunden wird.

Die WO 2011/038790 A1 beschreibt eine Anordnung umfassend ein Zahnrad und einen Kupplungskörper, der mit dem Zahnrad zur Übertragung einer Drehbewegung formschlüssig verbunden ist, wobei das Zahnrad und der Kupplungskörper an einander zugewandten Stirnseiten je eine Geometrie aufweisen, die in Verbindung mit der Geometrie des jeweils anderen Bauteils eine formschlüssige Verbindung bildet, wobei das Zahnrad und der Kupplungskörper jeweils als sintertechnisch hergestelltes Bauteil ausgebildet ist und wobei in das Zahnrad und den Kupplungskörper die jeweilige stirnseitige Geometrie eingepresst ist, durch welche das Zahnrad und der Kupplungskörper zueinander positionierbar sind. Das Zahnrad und der Kupplungskörper können zusätzlich auch stoffschlüssig miteinander verbunden sein.

Die US 2004/0177719 A1 beschreibt verschiedene pulvermetallurgische Verfahren zur Herstellung von Getriebezahnrädern. Diese werden in zumindest einem Teil der Oberfläche bis im Wesentlichen Volldichte verdichtet. Das Nachverdichten erfolgt dabei mittels Oberflächenwalzen oder Kugelstrahlen. Es wird weiter ausgeführt, dass es für Schweiß- oder Lötverbindungen von Vorteil ist, wenn diese im oberflächenverdichteten Bereich durchgeführt werden, da die Poren bei Sinterbauteilen ein Problem hinsichtlich Infiltration mit dem Schweißwerkstoff darstellen.

Die Aufgabe vorliegender Erfindung besteht darin, die Schweißbarkeit eines Sintermetallbauteils mit einem weiteren metallischen Bauteil zu verbessern.

Diese Aufgabe wird durch das eingangs genannte Verfahren gelöst, wobei vorgesehen ist, dass für die Herstellung des verdichteten Oberflächenbereichs dieser mit einem Übermaß hergestellt wird.

Durch die Verdichtung des Oberflächenbereichs des Sinterbauteils, in dem die Schweißnacht angebracht wird, vor dem Verschweißen der beiden Bauteile miteinander wird eine Reduzierung der Porigkeit des Sintermaterials erreicht. Es wird damit verhindert, dass Waschflüssigkeiten - üblicherweise werden die Sinterbauteile vor dem Verschweißen zumindest in Bereich der späteren Schweißnaht gereinigt - während des Schweißens aus den Poren ausdampfen, wodurch in weiterer Folge die Lunkerbildung in der Schweißnaht vermieden bzw. zumindest reduziert wird. Die Verbundfestigkeit des Bauteils kann damit erhöht werden. Von Vorteil ist, dass durch die lediglich partielle Verdichtung die Porigkeit in anderen Bereich des Sinterbauteils erhalten bleibt, eine Eigenschaften die an und für sich bei Sinterbauteilen gewünscht ist, insbesondere wenn es sich um so genannte nasslaufende Sinterbauteile handelt, also um Sinterbauteile die während des Betriebes mit einem Schmiermittel zur Reduktion der Reibung und zur Kühlung versorgt werden, da die Poren bekanntlich wie Schmiermitteltaschen wirken. Durch die Herstellung des zu verdichtenden Oberflächenbereichs mit einem Übermaß wird erreicht, dass die Verdichtung des Oberflächenbereichs durch einfache Materialverdrängung in den Bauteil in diesem Bereich herstellbar ist.

Bevorzugt wird der zu verdichtende Oberflächenbereich des Sinterbauteils auf eine Dichte von zumindest 95 % der Volldichte des Werkstoffes verdichtet, wodurch die voranstehend genannten Effekte der verbesserten Schweißbarkeit weiter verbessert werden können. Es wird damit auch möglich Schweißverfahren effizienter einzusetzen, die im Bereich von Sinterbauteilen problembehaftet sind, insbesondere das Laserschweißen oder das Elektronenstrahlschweißen.

Durch das Verdichten des Oberflächenbereichs wird aufgrund der erhöhten Reibung an den Stirnflächen die Verformung zumindest weitgehend verhindert. Unterhalb dieses Oberflächenbereiches entsteht damit das so genannte "Schmiedekreuz" mit hohen Zugspannungen an den Seitenbereichen und hohen Schubspannungen im Mittenbereich. Um zu hohe Spannungen im Sinterbauteil im Bereich der Schweißnaht zu vermeiden ist es daher von Vorteil, wenn der zu verdichtende Oberflächenbereich des Sinterbauteils mit einer Breite hergestellt wird, die zumindest der Schweißnahtbereite und maximal siebenmal der Schweißnahtbereite entspricht. Die obere Grenze ist dabei in Hinblick auf die an sich gewünschte Offenporigkeit gewählt, da ein breiterer, verdichteter Bereich die Schweißbarkeit des Sinterbauteils nicht weiter verbessert. Bevorzugt wird dabei, wenn der verdichtete Bereich des Sinterbauteils eine größere Querschnittsfläche aufweist, als die Querschnittsfläche der Schweißnaht, in gleicher Richtung betrachtet, da damit negative Einflüsse des Waschmediums aus an den Schweißnahtbereich anschließenden Bereichen des Sinterbauteils besser vermieden werden können bzw. der Schweißprozess an sich einfacher gestaltet werden kann.

Es ist dabei auch von Vorteil, wenn der Sinterbauteil im Oberflächenbereich bis zu einer Tiefe von zumindest der Schweißnahtbereite verdichtet wird, um während der Durchwärmung des Sinterbauteils während des Schweißens die Fehlstellenbildung in der Schweißnaht bzw. in oberflächennahen Bereichen unterhalb der Schweißnaht durch Ausgasungen des Waschmediums sicherer zu vermeiden.

Es ist auch möglich, dass beide metallischen Bauteile als Sinterbauteile ausgeführt werden, wobei sowohl der erste Oberflächenbereich des ersten Sinterbauteils als auch der zweite Oberflächenbereich des zweiten Sinterbauteils verdichtet werden. Es können damit sämtliche bekannten Vorteile der Sintertechnologie, wie z.B. die einfache Herstellung komplexer Geometrien, in der gesamten Baugruppe verwirklicht werden.

Bevorzugt sind das erste Bauteil als Zahnrad und das zweite Bauteil als Kupplungskörper einer Getriebesynchronisation ausgebildet.

Besonders vorteilhaft ist, wenn die Verdichtung des Oberflächenbereiches während der Kalibrierung des Sinterbauteils durchgeführt wird. Da die Kalibrierung des Sinterbauteils üblicherweise zur Erhöhung der Bauteilgenauigkeit ohnehin zum Prozessablauf zur Herstellung der Baugruppe gehört, wird auf diese Weise ein zusätzlicher Verfahrensschritt für die Herstellung der Oberflächenverdichtung eingespart, wodurch das Verfahren effizienter gestaltet werden kann.

Es kann auch vorgesehen werden, dass die beiden metallischen Bauteile erst nach dem Verbinden gehärtet werden, wodurch die Qualität der Schweißnaht und der gesamten Baugruppe verbessert werden kann.

Zum besseren Verständnis der Erfindung wird diese anhand der nachfolgenden Figuren näher erläutert.

Es zeigen jeweils in schematisch vereinfachter Darstellung:
- Fig. 1: eine Baugruppe in Seitenansicht geschnitten;
- Fig. 2: einen Kupplungskörper in Seitenansicht geschnitten;
- Fig. 3: eine Ausführungsvariante eines Kupplungskörpers in Seitenansicht geschnitten;
- Fig. 4: eine Schweißnaht nach dem Stand der Technik;
- Fig. 5: eine Schweißnaht zwischen zwei Bauteilen mit verdichteten Oberflächenbereichen;
- Fig. 6: einen Ausschnitt aus einer Ausführungsvariante eines Kupplungskörpers in Seitenansicht geschnitten;
- Fig. 7: einen Ausschnitt aus einer Ausführungsvariante eines Kupplungskörpers in Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

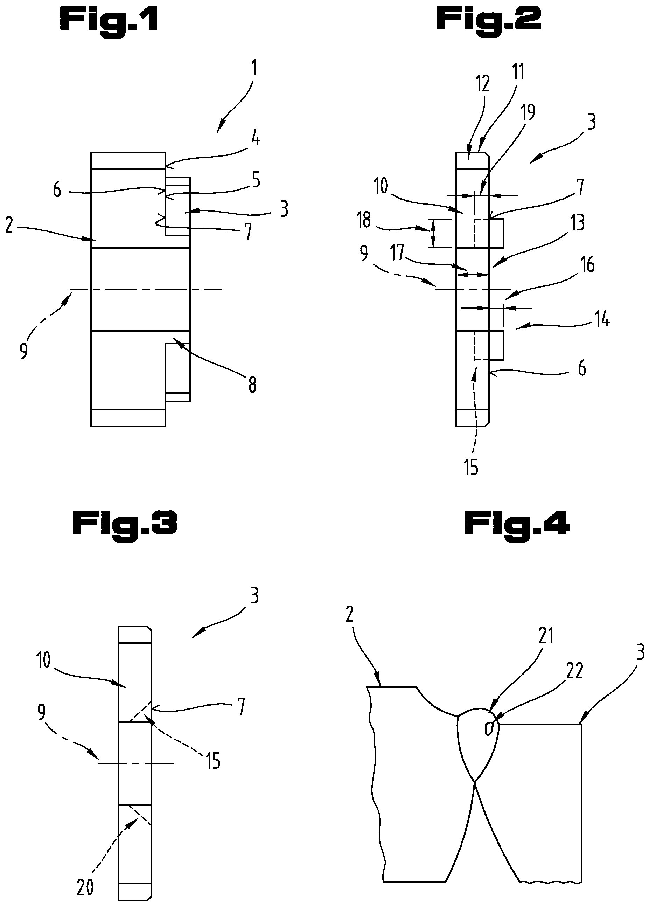

Fig. 1 zeigt eine Baugruppe 1 umfassend einen oder bestehend aus einem ersten metallischen Bauteil 2 und einen/einem eigenständigen zweiten metallischen Bauteil 3. Der erste Bauteil 2 weist eine erste Oberfläche 4 auf, die einen ersten Oberflächenbereich 5 umfasst. Der zweite Bauteil 3 weist eine zweite Oberfläche 6 auf, die einen zweiten Oberflächenbereich 7 umfasst. Der zweite Bauteil 3 ist an dem ersten Bauteil 2 so angeordnet, dass die beiden Oberflächen 4, 6, und damit auch die beiden Oberflächenbereiche 5, 7, aufeinander zu weisen. Beispielsweise kann der zweite Bauteil 3 auf einem nabenartigen Vorsprung 8 des ersten Bauteils 2, der sich entlang einer Mittelachse 9 erstreckt, angeordnet ist. Die beiden Bauteile 2, 3 sind in zumindest einem Teilbereich der Oberflächenbereiche 5, 7 miteinander stoffschlüssig verbunden, insbesondere verschweißt, wobei die beiden Oberflächenbereiche 5, 7 zumindest annährend unmittelbar nebeneinander liegend - in Richtung der Mittelachse 9 - angeordnet sind.

Bevorzugt ist der erste Bauteil 2 ein Zahnrad, insbesondere ein Gangzahnrad, und der zweite Bauteil 3 ein Kupplungskörper, wie derartige Bauteile in Getriebesynchronisationen eingesetzt werden. Prinzipiell kann die Baugruppe 1 allerdings auch anders ausgeformte metallische Bauteile 2, 3 aufweisen, die miteinander stoffschlüssig verbunden sind, beispielsweise kann der Kupplungskörper auch mit einem Kettenrad oder einer Hohlwelle verbunden sein. Es ist auch möglich, dass dar erste Bauteil 2 eine Welle ist, und der zweite Bauteil 3 eine Synchronnabe, die mit der Welle verbunden ist. Letztere muss in diesem Fall nicht die an sich übliche Steckverzahnung aufweisen.

Zumindest einer der beiden metallischen Bauteile 2, 3 ist ein Sinterbauteil, d.h. nach einem Sinterverfahren hergestellt. Vorzugsweise ist der Kupplungskörper, also der Bauteil 3, ein Sinterbauteil.

Da Sinterverfahren aus dem Stand der Technik bekannt sind, sei zu Details dazu an die einschlägige Literatur verwiesen. Üblicherweise umfassen Sinterverfahren die Schritte gegebenenfalls Pulvermischen, Pulverpressen zu einem Grünling, Sintern, Nachbearbeitung des gesinterten Bauteils. Gegebenenfalls kann auch eine zweistufige Sinterung mit einem Vorsinterschritt durchgeführt werden.

Der Sinterbauteil kann beispielsweise aus einem üblicherweise verwendeten Stahlpulver bestehen. Es sind allerdings auch andere Metallpulver(mischungen) im Rahmen der Erfindung zur Herstellung des Sinterbauteils verwendbar. Zu den üblicherweise verwendeten Metallpulvern sei ebenfalls an die einschlägige Literatur und die einschlägigen Normen verwiesen.

Das andere Bauteil, also insbesondere das metallische Bauteil 2, kann aus einem Vollmaterial, also beispielsweise aus Stahl oder einem anderen Metall oder einer anderen Metalllegierung, bestehen. Beispielsweise kann das Bauteil 2 ein Gussbauteil sein, dass gegebenenfalls spanend nachbearbeitet wird.

In einer Ausführungsvariante dazu kann der Bauteil 2 aber ebenfalls als Sinterbauteil ausgeführt sein. Es sei dazu auf voranstehenden Ausführungen zum Sintern des Bauteils 3 verwiesen. Die folgenden Ausführungen zum Sinterbauteil, d.h. den Bauteil 3, sind daher auch auf diese Ausführungsvariante des Bauteils 2 auf diesen anwendbar.

Es ist allerdings auch möglich, dass der Bauteil 2 als Sinterbauteil ausgeführt ist und der Bauteil 3 aus einem Vollmaterial.

Zur Verbesserung der stoffschlüssigen Verbindung, insbesondere der Schweißbarkeit, des Sinterbauteils, also insbesondere des Bauteils 3 und/oder des Bauteils 2, ist vorgesehen, dass zumindest in jenem Teil der Oberfläche 6 und/oder 4, in dem das Zusatzmaterial für die Ausbildung der stoffschlüssigen Verbindung aufgebracht wird, also insbesondere die Schweißnaht ausgebildet wird, dieser vor der Herstellung der stoffschlüssigen Verbindung verdichtet wird. Dieser Teil der Oberfläche 6 und/oder 4 entspricht dabei den voranstehend genannten Oberflächenbereiche 5 und/oder 7 der Bauteile 2 und/oder 3, wobei die stoffschlüssige Verbindung auch nur in einem Teilbereich dieser Oberflächenbereiche 5 und/oder 7 ausgebildet werden kann. Die Oberflächenbereiche 5 und/oder 7 weisen damit, verglichen mit den um die Oberflächenbereiche 5 und/oder 7 umliegenden weiteren Oberflächenbereiche der Bauteile 2 und/oder 3 eine höhere Dichte auf. Selbstverständlich weisen die unmittelbar unterhalb der Oberflächenbereiche 5 und/oder 7 liegenden Bereiche der Bauteile 2 und/oder 3 aufgrund der Verdichtung ebenfalls eine höhere Dichte auf, gegebenenfalls höher als tiefer liegende Kernschichten des Bauteils 2 und/oder 3, sodass im Sinne der Beschreibung mit der Verdichtung der Oberflächenbereich 5 und/oder 7 nicht nur exakt die Oberfläche selbst gemeint ist.

Eine Möglichkeit der Ausbildung der verdichteten Oberflächenbereiche 5 und/oder 7 ist in Fig. 2 dargestellt.

Fig. 2 zeigt den als Kupplungskörper für eine Getriebesynchronisation ausgebildeten Bauteil 3 in Seitenansicht geschnitten und vereinfacht dargestellt. Der Bauteil 3 weist einen Bauteilkörper 10 auf der an einer radial nach außen weisenden Stirnfläche 11 eine übliche Verzahnung 12 zum Eingriff einer Schiebemuffe der Getriebesynchronisation aufweist. Im Bereich um die Mittelachse 9 ist ein Durchbruch 13 bzw. eine Bohrung ausgebildet, in die der nabenförmige Vorsprung 8 des Bauteils 2 (Fig. 1) eingeschoben werden kann. Der zu verdichtende Oberflächenbereich 7 befindet unmittelbar anschließend an den Durchbruch 13, da in diesem Bereich bei der dargestellten Ausführungsvariante die stoffschlüssige Verbindung mit dem Bauteil 2 erfolgt.

Es sei darauf hingewiesen, dass die genaue Situierung des verdichteten Oberflächenbereichs 7 abhängig ist von der Stelle, an dem die stoffschlüssige Verbindung ausgebildet werden soll. Mit anderen Worten ausgedrückt, kann also die Situierung dieses Oberflächenbereichs 7 je nach Baugruppe von der in Fig. 2 dargestellten Situation abweichen, sodass also die dargestellte Platzierung nicht einschränkend für die Erfindung zu verstehen ist.

Zur Erreichung der Verdichtung wird der Bauteil 3 im Bereich des zu verdichtenden Oberflächenbereichs 7 mit einem Übermaß hergestellt, sodass also das nach dem Sintern hergestellte Halbfertigfabrikat einen Vorsprung 14 aufweist, der in der dargestellten Ausführungsvariante des Bauteils 3 als Ringsteg ausgebildet ist. In einem nach dem Sintern erfolgenden Verdichtungsschritt kann dieser Vorsprung 14 mit Hilfe eines entsprechenden Pressstempels oder einem anderen geeigneten Verdichtungswerkzeug in das Material des Bauteilkörpers 10 eingepresst werden, wodurch in diesem Oberflächenbereich 7 eine verdichtete Zone 15 entsteht, die in Fig. 2 strichliert angedeutet ist.

Alternativ dazu besteht auch die Möglichkeit, dass die Verdichtung bereits vor dem Sintern erfolgt, indem der Grünling beim Pulverpressen in diesem Bereich mit einer entsprechend höheren Menge an Pulver ausgeführt wird.

Der verdichtete Oberflächenbereich 7 besteht vorzugsweise aus demselben Werkstoff wie der restliche Bauteilkörper 10. Es ist jedoch auch möglich, in diesen Oberflächenbereich 7 einen Werkstoff mit einer zur Zusammensetzung des Werkstoffes des restlichen Bauteilkörpers 10 unterschiedlichen Zusammensetzung anzuordnen, beispielsweise mit einer Zusammensetzung, die die Verdichtung erleichtert oder die günstigere Eigenschaften in Hinblick auf die stoffschlüssige Verbindung aufweist. Das Einbringen diese zusätzlichen Werkstoffes kann dabei wiederum während des Pulverpressens erfolgen, beispielsweise indem eine entsprechende Aussparung hierfür in der Pulverpresse vorgesehen wird, oder nach dem Sintern durch Auflegen auf das gesinterte Halbfertigfabrikat, wobei es in letzterem Fall aufgrund der besseren Handhabbarkeit möglich ist, dass der Zusatzwerkstoff ebenfalls bereits verdichtet und gegebenenfalls gesintert ist. Ebenso kann dieser Zusatzwerkstoff bei einem zweistufigen Sinterverfahren nach dem Vorsintern aufgelegt und gemeinsam mit dem anderen Werkstoff gesintert werden.

Der Vorsprung 14 kann beispielsweise eine Höhe 16 in Richtung der Mittelachse 9 aufweisen, die ausgewählt ist aus einem Bereich mit einer unteren Grenze von 3 % und einer oberen Grenze von 150 %, insbesondere einer unteren Grenze von 5 % und einer oberen Grenze von 40 %, einer Bauteilhöhe 17 in diesem Bereich.

Vorzugsweise wird die Verdichtung so weit durchgeführt, dass dieser Oberflächenbereich 7 des Sinterbauteils eine Dichte von zumindest 95 %, insbesondere zumindest 97 %, vorzugsweise zumindest 98 %, der Volldichte des Werkstoffes des Bauteils 3 bzw. des verwendeten zusätzlichen Werkstoffes aufweist.

Durch die Verdichtung des Oberflächenbereichs 7 entsteht bei der dargestellten Ausführungsvariante eine ringförmige verdichtete Zone 15 um den Durchbruch 13, wobei die Oberfläche 6 selbst nach der Verdichtung ebenflächig ist bzw. der gewünschten Bauteilgeometrie des fertigen Bauteils in diesem Bereich entspricht, also durch die Verdichtung keine zusätzlichen Vorsprünge vorhanden sind - wenngleich dies prinzipiell möglich ist.

Es sei darauf hingewiesen, dass die in Fig. 2 dargestellte rechteckige Form der verdichteten Zone 15 vereinfacht bzw. idealisiert ist. In der Praxis entsteht ein anderer Verlauf dieses verdichteten Bereichs bei der dargestellten Ausführungsvariante aufgrund der Ausbildung des so genannten "Schmiedekreuzes" während der Verdichtung. Aus diesem Grund ist es von Vorteil, wenn der Oberflächenbereich 7 des Sinterbauteils eine Breite 18 aufweist, die zumindest der Breite der stoffschlüssigen Verbindung, also beispielsweise einer Schweißnahtbereite, insbesondere zumindest 1,5-mal, vorzugsweise zumindest zweimal, dieser Breite, und maximal siebenmal der Breite der stoffschlüssigen Verbindung entspricht. Es kann damit auch ein Kompromiss zwischen Größe des verdichteten Bereichs und mechanische Belastung des Verdichtungswerkzeuges eingestellt werden, da mit zunehmender Größe der verdichteten Zone auch die Belastung des Werkzeuges zunimmt.

Eine Tiefe 19 der verdichteten Zone 15 in Richtung der Mittelachse 9 kann dabei zumindest der Breite der stoffschlüssigen Verbindung entsprechen, wobei die Verdichtung auch über die gesamte Bauteilhöhe 17 durchgeführt werden kann.

Zur Verdeutlichung, dass der verdichtete Oberflächenbereich 7 bzw. die verdichtete Zone 15 auch anders ausgeführt sein kann, zeigt Fig. 3 das Bauteil 3 im Querschnitt und vereinfachter Darstellung, das ebenfalls als Kupplungskörper ausgeführt sein kann, mit einer schräg zur Mittelachse 9 verlaufenden Grenzlinie 20 zwischen dem unverdichteten und dem verdichteten Bereich des Bauteilkörpers 10. Diese verdichtete Zone 15 wird dabei ebenfalls durch das Verdrücken bzw. Eindrücken des - in Fig. 3 nicht dargestellten - Vorsprunges 14 erreicht, wobei das Verdichtungswerkzeug schräg zur Mittelachse auf den Bauteilkörper 10 einwirkt.

Mit der Verfahrensweise nach der Erfindung kann bei Verwendung eines Sinterstahls der verdichtet Bereich beispielsweise eine Dichte von über 7,5 g/cm³ aufweisen, der restliche Bereich des Bauteilkörpers hingegen eine Dichte von unter 7,5 g/cm³ (= Grunddichte).

Die Verdichtung des Oberflächenbereichs 7 wird, wie dies bereits voranstehend ausgeführt wurde, bevorzugt während der Kalibrierung des Sinterbauteils mit einem entsprechenden Kalibrierwerkzeug durchgeführt, beispielsweise einer Kalibrierpresse. Das Kalibrieren dient bekanntlich zur Erhöhung der Formgenauigkeit eines Sinterbauteils.

Gegebenenfalls kann zumindest der Sinterbauteil, vorzugsweise die gesamte Baugruppe 1, nach dem Verbinden gehärtet werden, beispielsweise durch Einsatzhärten. Abschließend kann noch eine Hartfeinbearbeitung der Baugruppe 1 bzw. des Sinterbauteils durchgeführt werden, beispielsweise an den Lagerstellen oder an Konus- bzw. Planflächen. Die Hartfeinbearbeitung erhöht ebenfalls die Genauigkeit der Bauteilgeometrie.

Das stoffschlüssige Verbinden der beiden Bauteile 2, 3 miteinander zumindest in einem Teilbereich deren Oberfläche kann mit oder ohne einen Zusatzwerkstoff durchgeführt werden. Sofern ein Zusatzwerkstoff verwendet wird, entspricht dieser dem Stand der Technik zu stoffschlüssigen Verbindungen. Insbesondere werden die beiden Bauteile 2, 3 miteinander verschweißt, wobei auch andere Verfahren, wie beispielsweise Löten, möglich sind. Vorzugsweise werden die beiden Bauteile 2, 3 durch Laserschweißen oder Elektronenstrahlschweißen miteinander verbunden.

In Fig. 4 ist eine Schweißnaht 21 zwischen dem Bauteil 2 und dem Bauteil 3 dargestellt. Die beiden Bauteile 2, 3 weisen keine verdichteten Zonen 15 auf. Aufgrund des während des Schweißens aus den Poren des gesinterten Bauteils 3 ausdampfenden Waschmediums entstehen in der Schweißnaht 21 Lunker 22, die zu einer Schwächung der Schweißnaht 21 führen.

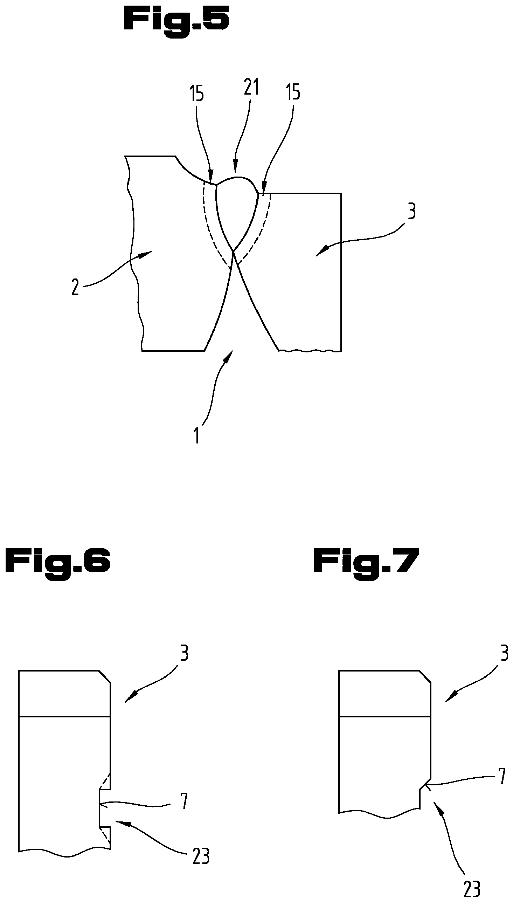

Zum Unterschied dazu zeigt Fig. 5 eine geschweißte Baugruppe 1 nach der Erfindung, wobei in diesem Fall beide Bauteile 2, 3 als Sinterbauteile ausgeführt sind und jeweils im Bereich der Schweißnaht 21 die verdichtete Zone 15 aufweisen. Es sei jedoch noch einmal ausdrücklich darauf hingewiesen, dass es im Rahmen der Erfindung auch möglich ist, dass einer der beiden Bauteil 2, 3 kein Sinterbauteil ist sondern ein Vollmaterialbauteil.

Wie aus Fig. 5 ersichtlich ist, ist die Schweißnaht 21 lunkerfrei ausgebildet.

In den Fig. 6 und 7 sind Ausführungsvarianten der Verdichtung des Oberflächenbereichs 7 bei Bauteilen 3, insbesondere Kupplungskörper, dargestellt. Dabei wird die Verdichtung des Oberflächenbereichs 7 nicht durch Einpressen einer zusätzlichen Menge an Werkstoff erzeugt, sondern wird durch die Verdichtung eine Ausnehmung 23, die gegebenenfalls hinterschnitten oder abgeschrägt ausgeführt sein kann, erzeugt. Diese Ausnehmung 23 wird in weiterer Folge beim stoffschlüssigen Verbinden vorzugsweise mit dem Schweißwerkstoff zumindest annähernd vollständig ausgefüllt. Dargestellt ist dabei, dass in Anlehnung an die Ausführungsvariante des Bauteils 3 nach Fig. 2 eine Ringnut oder in Anlehnung an die Ausführungsvariante des Bauteils 3 nach Fig. 3 eine Abschrägung erzeugt werden kann.

Selbstverständlich besteht im Rahmen der Erfindung auch die Möglichkeit, dass mehrere verdichtete Oberflächenbereich 7 ausgebildet werden. Ebenso besteht die Möglichkeit einer Kombination eines ebenflächigen, verdichteten Oberflächenbereichs 7 mit einem unter Ausbildung der Ausnehmung 23 vertieften, verdichteten Oberflächenbereichs 7 in einem Bauteil 2 und/oder 3.

Des Weiteren sind die in den Fig. 2, 3, 6, 7 gezeigten Designs von Kupplungskörpern nur beispielhaft zu sehen. Diese können generell eine dem Stand der Technik entsprechende Geometrie aufweisen, also beispielsweise auch mit einem Konus ausgeführt sein.

Die Ausführungsbeispiele zeigen mögliche Ausführungsvarianten der Baugruppe 1 bzw. der Bauteile 2, 3, wobei an dieser Stelle bemerkt sei, dass auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Baugruppe 1 bzw. der Bauteile 2, 3 diese bzw. deren Bestandteile teilweise unmaßstäblich und/oder vergrößert und/oder verkleinert dargestellt wurden.

### Bezugszeichenaufstellung

- 1: Baugruppe
- 2: Bauteil
- 3: Bauteil
- 4: Oberfläche
- 5: Oberflächenbereich

- 6: Oberfläche
- 7: Oberflächenbereich
- 8: Vorsprung
- 9: Mittelachse
- 10: Bauteilkörper

- 11: Stirnfläche
- 12: Verzahnung
- 13: Durchbruch
- 14: Vorsprung
- 15: Zone

- 16: Höhe
- 17: Bauteilhöhe
- 18: Breite
- 19: Tiefe
- 20: Grenzlinie

- 21: Schweißnaht
- 22: Lunker
- 23: Ausnehmung

## Patentansprüche

1. Verfahren zum stoffschlüssigen Verbinden eines ersten metallischen Bauteils (2), der einen ersten Oberflächenbereich (5) aufweist, mit einem zweiten metallischen Bauteil (3), der einen zweiten Oberflächenbereich (7) aufweist, wobei die beiden Oberflächenbereiche (5, 7) einander zugewandt werden, und wobei zumindest einer der beiden Bauteile (2, 3) ein Sinterbauteil ist, wobei vor der Ausbildung der stoffschlüssigen Verbindung der beiden Bauteile (2, 3) miteinander zumindest in dem Oberflächenbereich (7) des Sinterbauteils, in dem die stoffschlüssige Verbindung ausgebildet wird, die Dichte erhöht wird **dadurch gekennzeichnet, dass** für die Herstellung des verdichteten Oberflächenbereichs (7) dieser mit einem Übermaß hergestellt wird.

2. Verfahren nach Anspruch 1, **dadurch gekennzeichnet, dass** die Verdichtung des Oberflächenbereiches (7) während der Kalibrierung des Sinterbauteils durchgeführt wird.

3. Verfahren nach Anspruch 1 oder 2, **dadurch gekennzeichnet, dass** die beiden metallischen Bauteile (2, 3) nach dem stoffschlüssigen Verbinden gehärtet werden.

4. Verfahren nach einem der Ansprüche 1 bis 3, **dadurch gekennzeichnet, dass** in dem zu verdichtenden Oberflächenbereich (7) ein Werkstoff mit einer zur Zusammensetzung des Werkstoffes eines restlichen Bauteilkörpers (10) unterschiedlichen Zusammensetzung angeordnet wird.

5. Verfahren nach einem der Ansprüche 1 bis 4, **dadurch gekennzeichnet, dass** der verdichtete Oberflächenbereich (7) des Sinterbauteils auf eine Dichte von zumindest 95 % der Volldichte des Werkstoffes verdichtet wird.

6. Verfahren nach einem der Ansprüche 1 bis 5, **dadurch gekennzeichnet, dass** der verdichtete Oberflächenbereich (7) des Sinterbauteils mit einer Breite (18) hergestellt wird, die zumindest einer Schweißnahtbereite und maximal siebenmal der Schweißnahtbereite entspricht.

7. Verfahren nach einem der Ansprüche 1 bis 6, **dadurch gekennzeichnet, dass** der Sinterbauteil im verdichteten Oberflächenbereich (7) bis zu einer Tiefe (19) von zumindest der Schweißnahtbereite verdichtet wird.

8. Verfahren nach einem der Ansprüche 1 bis 7, **dadurch gekennzeichnet, dass** beide metallische Bauteile (2, 3) als Sinterbauteile ausgeführt werden und dass sowohl der erste Oberflächenbereich (5) des ersten metallischen Bauteils (2) als auch der zweite Oberflächenbereich (7) des zweiten metallischen Bauteils (3) verdichtet werden.

## Claims

1. A method for materially bonding a first metallic component (2), which comprises a first surface region (5), with a second metallic component (3), which comprises a second surface region (7), wherein the two surface regions (5, 7) face one another, and wherein at least one of the two components (2, 3) is a sintered component, wherein prior to the formation of the material connection between the two components (2, 3) with one another at least in the surface region (7) of the sintered component, in which the material connection is formed, the density is increased, **characterized in that** for the production of the compacted surface region (7) the latter is produced with an excess.

2. The method according to claim 1, **characterized in that** the compaction of the surface region (7) is performed during the calibration of the sintered component.

3. The method according to claim 1 or 2, **characterized in that** the two metallic components (2, 3) are hardened after the material connection has been formed.

4. The method according to one of claims 1 to 3, **characterized in that** in the surface region (7) to be compacted a material is arranged with a composition that is different from the composition of the material of the remaining component body (10).

5. The method according to one of claims 1 to 4, **characterized in that** the compacted surface region (7) of the sintered component is compressed to a density of at least 95% of the total density of the material.

6. The method according to one of claims 1 to 5, **characterized in that** the compacted surface region (7) of the sintered component is produced with a width (18) which corresponds at least to one weld seam width and to a maximum of seven times the weld seam width.

7. The method according to one of claims 1 to 6, **characterized in that** the sintered component in the compacted surface region (7) is compacted up to a depth (19) of at least the weld seam width.

8. The method according to one of claims 1 to 7, **characterized in that** both metallic components (2, 3) are configured as sintered components and **in that** both the first surface region (5) of the first metallic component (2) and the second surface region (7) of the second metallic component (3) are compacted.

## Revendications

1. Procédé de liaison par fusion de matière d'un premier composant métallique (2), qui présente une première partie de surface (5), avec un deuxième composant métallique (3), qui présente une deuxième partie de surface (7), les deux parties de surface (5, 7) étant orientées l'une vers l'autre, et au moins un des deux composants (2, 3) est un composant fritté, moyennant quoi, avant l'établissement de la liaison par fusion de matière des deux composants (2, 3) entre eux, au moins dans la partie de surface (7) du composant fritté, dans laquelle la liaison par fusion de matière est réalisée, la densité est augmentée, **caractérisé en ce que**, pour la réalisation de la partie de surface compressée (7), celle-ci est réalisée avec un surdimensionnement.

2. Procédé selon la revendication 1, **caractérisé en ce que** la compression de la partie de surface (7) est effectuée pendant le calibrage du composant fritté.

3. Procédé selon la revendication 1 ou 2, **caractérisé en ce que** les deux composants métalliques (2, 3) sont durcis après la liaison par fusion de matière.

4. Procédé selon l'une des revendications 1 à 3, **caractérisé en ce que**, dans la partie de surface (7) à compresser, est disposé un matériau avec une composition différente de la composition du matériau du reste du corps du composant (10).

5. Procédé selon l'une des revendications 1 à 4, **caractérisé en ce que** la partie de surface (7) compressée du composant fritté est compressé jusqu'à une densité d'au moins 95 % la densité totale du matériau.

6. Procédé selon l'une des revendications 1 à 5, **caractérisé en ce que** la partie de surface (7) compressée du composant fritté est réalisée avec une largeur (18) qui correspond au moins à une largeur de cordon de soudure et au maximum à sept fois la largeur du cordon de soudure.

7. Procédé selon l'une des revendications 1 à 6, **caractérisé en ce que** le composant fritté est compressé dans la partie de surface (7) jusqu'à une profondeur (19) au moins égale à la largeur du cordon de soudure.

8. Procédé selon l'une des revendications 1 à 7, **caractérisé en ce que** les deux composant métalliques (2, 3) sont réalisés comme des composants frittés et **en ce qu'**aussi bien la première partie de surface (5) du premier composant métallique (2) que la deuxième partie de surface (7) du deuxième composant métallique (3) sont compressées.
